# EUROPÄISCHE PATENTSCHRIFT

(11) **EP 1 421 301 B1**
(45) Veröffentlichungstag und Bekanntmachung des Hinweises auf die Patenterteilung: **29.06.2005**
(21) Anmeldenummer: 02772202.4
(22) Anmeldetag: 24.08.2002
(51) Int. Cl.: F16H 63/20

(54) **EINSTANGEN-SCHALTEINRICHTUNG FÜR KRAFTFAHRZEUG-HANDSCHALTGETRIEBE**
SINGLE-ROD GEAR SHIFTING SYSTEM FOR A MANUAL GEARBOX FOR MOTOR VEHICLES
SYSTEME DE CHANGEMENT DE VITESSES A UNE TIGE POUR BOITE DE VITESSES A COMMANDE MANUELLE POUR AUTOMOBILE

(30) Priorität: 29.08.2001 DE 10142225
(43) Veröffentlichungstag der Anmeldung: 26.05.2004
(73) Patentinhaber: ZF FRIEDRICHSHAFEN Aktiengesellschaft, 88038 Friedrichshafen (DE)
(72) Erfinder: BEER, Uwe, 14476 Fahrland (DE); PATZNER, Jens, 14480 Potsdam (DE)
(86) Internationale Anmeldenummer: PCT/EP2002/009486
(87) Internationale Veröffentlichungsnummer: WO 2003/021136

(56) Entgegenhaltungen:
- DE-A- 19 859 482
- US-A- 5 291 799

## Beschreibung

Die vorliegende Erfindung betrifft eine Einstangen-Schalteinrichtung für Kraftfahrzeug-Handschaltgetriebe, insbesondere für ein Sechs-Gang-Getriebe, mit einer zentralen Schaltwelle und mit gabelförmigen Schaltelementen in Form von Schaltschwingen oder Schubgabeln, die in Schiebemuffen eingreifen nach dem Oberbegriff von Anspruch 1.

Eine Einstangen-Schalteinrichtung für Kraftfahrzeug-Handschaltgetriebe mit in Schiebemuffen eingreifenden gabelförmigen Schaltschwingen, welche über zumindest eine Schaltwelle um parallele Schwenklager aus ihrer Neutralstellung in Schaltstellungen verschwenkbar sind, wobei ortsfest im Getriebegehäuse angeordnete Verriegelungsmittel derart mit Verriegelungsnuten, die in an den Schaltschwingen befestigten Verriegelungsschwingen ausgebildet sind, zusammenwirken, dass bei Verschwenkung einer Schaltschwinge in eine Schaltstellung die übrigen Schaltschwingen in ihrer Neutralstellung verriegelt sind, ist aus der DE-A 199 51 683 der Anmelderin bekannt. Die parallel zum Radsatz liegende Schaltwelle betätigt Schaltgabeln oder Schaltschwingen beim Einlegen der Gänge. Der zu schaltende Gang ist gewählt, wenn der Schaltfinger der Schaltwelle sich in einem Mitnehmer der zu schaltenden Schaltgabel oder Schaltschwinge befindet. Wenn ein Gang eingelegt ist, liegen die Schaltfinger der benachbarten und nicht geschalteten Schaltgabeln oder Schaltschwingen unter oder über den Mitnehmern der.Schaltgabeln oder Schaltschwingen. Die mögliche Schaltgassenbreite ergibt sich aus dem Spiel des Schaltfingers und der Mitnehmer der nicht geschalteten Gänge. Abschrägungen an den Schaltfingern der Schaltwelle und an den Mitnehmern der Schaltgabeln oder Schaltschwingen bestimmen das Schaltbild am Schalthebel. Weiterhin ist aus der DE-A 198 59 482, dass der nächstliegende Stand der Technik darstellt, eine Gangschalteinrichtung mit einer Schaltwelle bekannt geworden, die in einem Gehäuse in Achsrichtung gleitend und in ihrer Umfangsrichtung drehbar gehalten ist und einen auf ihr befindlichen Hebel besitzt. Eine Vielzahl von Mitnehmern, die mit den Schaltschwingen bzw. Schaltgabeln verbunden sind, sind auf der Schaltwelle in Achsrichtung gleitend angeordnet. Durch einen mit der Schaltwelle verbundenen Betätigungshebel wird die Schaltwelle in Umfangsrichtung gedreht, um so wahlweise den Hebel an der Schaltwelle mit einem der Mitnehmer in Eingriff zu bringen. Durch den Betätigungshebel ist die Schaltwelle auch verschiebbar, um so mit dem Hebel an der Schaltwelle den in Eingriff stehenden Mitnehmer zu bewegen, so dass durch eine derartige Betätigung der Schaltwelle eine Gangschaltung ausgeführt wird. Auf der Schaltwelle ist ein erstes Element angeordnet, das mit einem zweiten Element zusammenwirkt, das im Gehäuse fest angeordnet ist. In einem der beiden Elemente ist eine Nut vorgesehen, die mit dem anderen Element so in Eingriff steht, dass dadurch die Bewegung der Schaltwelle in Wählrichtung definiert ist. Der benötigte Bauteilaufwand zur Bildung einer solchen Kulisse ist groß. Zudem muss eine zusätzliche Anordnung von Elementen an der Schaltwelle vorgesehen sein, die die Länge der Schaltwelle beeinflusst.

Der Erfindung liegt die Aufgabe zugrunde, eine Gangschalteinrichtung mit einer Kulisse zur Definition der Wählbewegung anzugeben, die die bestehenden Nachteile beseitigt.

Die Aufgabe wird gelöst mit einer Gangschalteinrichtung mit den Merkmalen des Anspruchsl. Ausgestaltungen sind Gegenstand von Unteransprüchen.

Eine Gangschalteinrichtung mit einer Einstangen-Schalteinrichtung ist in einem Gehäuse eines Kraftfahrzeug-Handschaltgetriebe angeordnet. Die Schalteinrichtung umfasst eine zentrale Schaltwelle und gabelförmige Schaltelemente in Form von Schaltschwingen oder Schubgabeln, die wahlweise und einzeln durch Drehen der Schaltwelle mit der Schaltwelle in Eingriff gebracht werden und die durch Schieben der Schaltwelle entlang der Drehachse der Schaltwelle eine Gangschaltung des ausgewählten Schaltelementes ausführen. Die Schalteinrichtung weist ein mit der Schaltwelle verbundenes erstes Element auf, das mit einem zweiten, im Gehäuse befestigten Element zusammenwirkt zur Definition der Drehung der Schaltwelle. Dabei weist das im Gehäuse befestigte, zweite Element eine der Anzahl der Schaltgassen entsprechende Anzahl von Schlitzen definierter Breite auf, die mit zwei an der Schaltwelle angeordneten Stiften zusammenwirken, die das erste Element bilden. Jeweils einer der Stifte greift beim Einlegen von einer der beiden in der gewählten Schaltgassen angeordneten Gangstufe in denjenigen der Schlitze ein, der bei Drehen der Schaltwelle der jeweiligen Schaltgasse entspricht und der dann nach Drehung der Schaltwelle den Stiften gegenüberliegt. In einer vorteilhaften Ausgestaltung sind die Stifte an einem Schaltfinger angeordnet, mit dem eine der gabelförmigen Schaltelemente zur Gangschaltung bewegbar sind. Die Stifte sind also am gleichen Schaltfinger angeordnet, der ansonsten zur Schaltung einer Gangstufe verwendet wird. Dabei entspricht dann bei einer entsprechenden Drehung der Schaltwelle, der Schlitz, in den die Stifte eingreifen können, derjenigen Schaltgasse, in der diejenige Gangstufen bzw. Gangstufen liegen, die durch das Schaltelement eingelegt werden, wozu der Schaltfinger in die jeweilige Schaltgabel bzw. Schaltschwinge eingreift. Bei einer Ausführungsform ist zwischen den beiden Stiften eine Nut vorgesehen, die im wesentliche der Länge der Schlitze im zweiten Element entsprechen. Dadurch wird die axiale Länge der beiden Elemente kurz gehalten und der Weg, den die Stifte bis zum Erreichen einer der Schlitze zurücklegen müssen, ist gering. In einer Ausführung wirkt diese Nut zwischen den beiden Stiften mit dem an dem gabelförmigen Schaltelement angeordneten Mitnehmer zur Gangschaltung zusammen. Eine Ausführung zeigt die beiden Stifte an einem Schieber angeordnet, der auf den Schaltfinger aufgesteckt ist. Vorteilhafterweise weisen die Stifte die Form eines Zahnes oder Nockens und die Schlitze Abweisschrägen auf. Die axiale Ausdehnung des ersten und zweiten Elementes entlang der Drehachse der Schaltwelle ist bestimmt durch die Länge der Schlitze und der hinzuaddierten Länge der beiden Stifte. Die Länge der Schlitze entspricht dabei dem zurückgelegten Schaltweg der Schaltwelle. Dadurch kann gegenüber bestehenden Systemen axiale Baulänge eingespart werden. Da an jedem Ende eines Schlitzes ein Stift angeordnet ist, wird die axiale Baulänge des aus erstem und zweitem Element bestehenden Systems nicht mehr von der Länge der Schaltgasse bestimmt, weil das mit der Schaltwelle bewegliche Element nicht mehr von einem Ende der Schaltgasse bis zum entgegengesetzten Ende der gleichen oder einer benachbarten Schaltgasse geführt werden muss. Vielmehr greift in der erfindungsgemäßen Form unmittelbar nach Verlassen des Schlitzes durch den einen Stift der andere Stift wieder in diesen Schlitz oder einen benachbarten Schlitz ein. Dadurch kann die Gassenführung exakter gestaltet werden. Eine Minimierung des Wählspiels in der Gangschalteinrichtung ist nahezu vollständig erreicht. Die Diagonalschaltbarkeit im Getriebe, also die Möglichkeit, gut und komfortabel von einer Schaltgasse in eine benachbarte Schaltgasse zu wechseln, wird verbessert, dadurch wird der Schaltkomfort deutlich erhöht. Die Erfüllung der Komfortanforderungen geht einher mit einer gleichzeitigen Kostenreduzierung. Die Funktion der Schaltfinger an der Schaltwelle und der Mitnehmer an den Schaltgabeln oder Schaltschwingen wird auf die ursprüngliche Funktion zurückgeführt und reduziert, nämlich die ausgewählte Schaltgabel oder Schaltschwinge lediglich zu schalten. Die Konturen der Schaltfinger und Mitnehmer bestimmen nicht länger das Schaltbild und ihre Toleranzen können gröber ausgelegt werden, was deutliche Kostenvorteile beinhaltet. Es ergibt sich eine hohe Schaltsicherheit, weil das kulissenhafte Zusammenwirken von Stiften und Schlitzen eine frühzeitige Gassenabweisung ermöglicht, so dass der klassische Verriegelungsfall, also das gleichzeitige Betätigen von zwei Schaltgabeln oder Schaltschwingen bis hin zum Sperren einer Schaltgabel oder Schaltschwinge, nicht mehr auftritt. Das die Schlitze aufweisende, gehäusefeste Element ist mit dem Getriebegehäuse verschraubt oder verstiftet. In diesem Element sind an den Schlitzen Abweisschrägen und das Wählspiel definiert. Durch die mit der Schaltwelle verbundenen Stifte oder auch Nocken, die auch als Einspurnocken oder Konturnocken bezeichnet werden, wird das Wählspiel auf die Schaltwelle übertragen. Jeweils ein Stift oder Nocken ist vor und hinter den Schlitzen angeordnet. Hierdurch entfällt die doppelte Abbildung des Schaltweges.

Die Erfindung wird anhand einer Zeichnung näher erläutert:

Es zeigen:

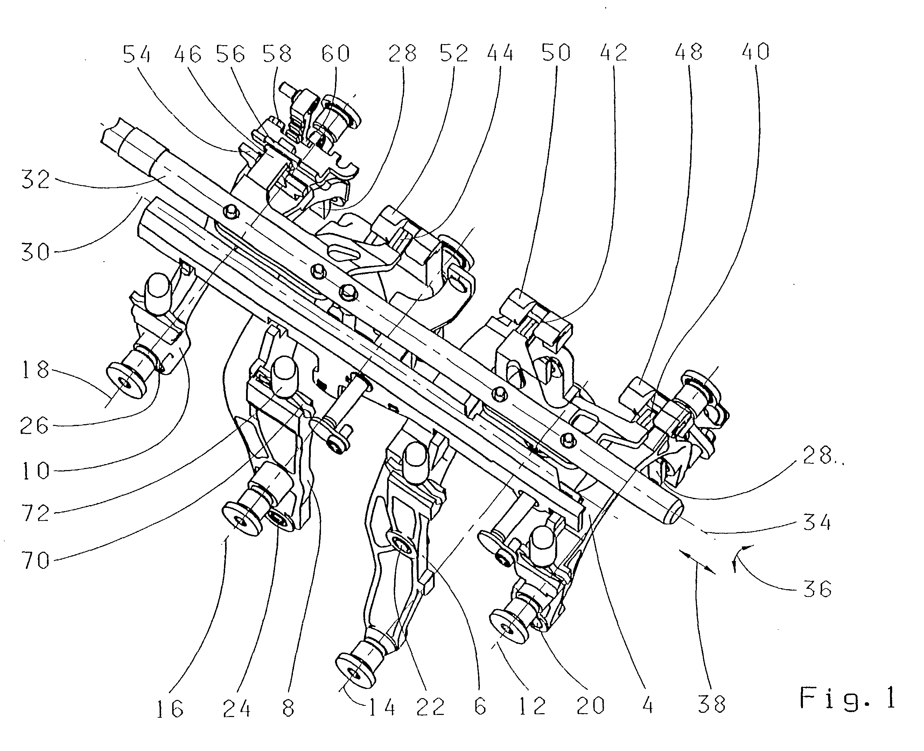

- Fig. 1: eine Schalteinrichtung;
- Fig. 2: einen Ausschnitt der Schalteinrichtung mit Elementen zur Wählspielbildung und
- Fig. 3: eine geänderte Ausführung nach Fig. 2.

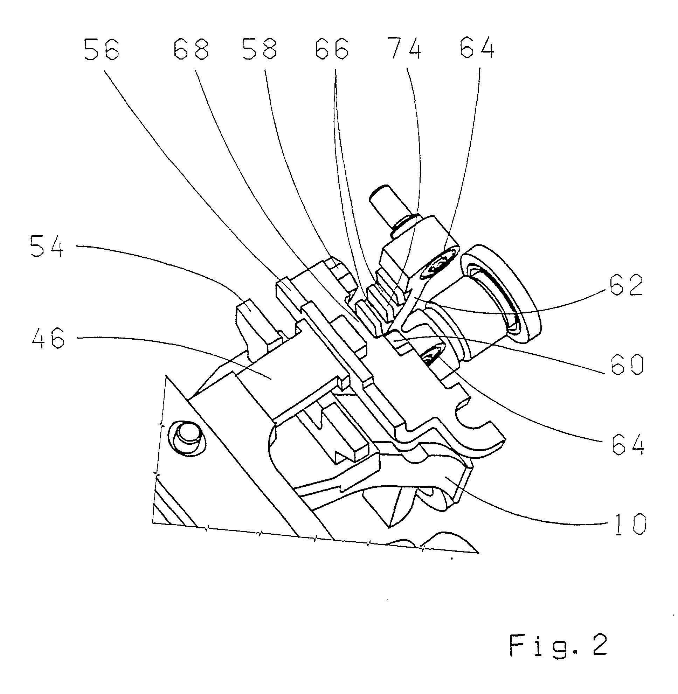

Eine Schalteinrichtung 2 besitzt vier Schaltschwingen 4, 6, 8, 10, die in einem nicht näher dargestellten Getriebegehäuse um Schwenkachsen 12, 14, 16, 18 schwenkbar gelagert sind. Die Schaltschwingen 4, 6, 8, 10 sind gabelförmig gestaltet und weisen im Bereich ihrer gabelförmigen Enden Lagerbohrungen 20, 22, 24, 26 auf, in denen Gleitsteine 28 drehbar gelagert sind, die in Umfangsnuten von Schaltmuffen zugehöriger Schaltkupplungen gelagert sind. Die nicht näher dargestellten Schaltkupplungen rotieren um eine Drehachse 30. Parallel zur Drehachse 30 und quer zu den Schwenkachsen 12, 14, 16, 18 ist eine Wähl- und Schaltwelle 32 angeordnet, die im Getriebegehäuse um eine Drehachse 34 in der Drehrichtung 36 drehbar und in Schaltrichtung 38 axial verschiebbar gelagert ist. Auf der Wähl- und Schaltwelle 32 sind Schaltfinger 40, 42, 44, 46 befestigt und zueinander winkelversetzt angeordnet. Bei einer Drehbewegung der Wähl- und Schaltwelle 32 gelangen die Schaltfinger 40, 42, 44, 46 einzeln nacheinander in Eingriff mit gabelförmigen Mitnehmern 48, 50, 52, 54, die an den Schaltschwingen 4, 6, 8, 10 befestigt sind. Die Schaltschwingen 4, 6, 8, 10 und die Schaltfinger 40, 42, 44, 46 sind jeweils einzelnen Gängen zugeordnet. So ist beispielsweise die Schaltschwinge 4 für den Rückwärtsgang, die Schaltschwinge 6 für den ersten und zweiten Gang, die Schaltschwinge 8 für den dritten und vierten Gang und die Schaltschwinge 10 für den fünften und sechsten Gang vorgesehen. Die Schalteinrichtung 2 ist in einer neutralen Schaltposition dargestellt, wobei die Wähl- und Schaltwelle 32 so gedreht ist, dass die Schaltgasse des dritten und vierten Gangs gewählt ist, indem der Schaltfinger 44 in den Mitnehmer 52 eingreift. Wird die Wähl- und Schaltwelle 32 in eine der beiden Schaltrichtungen 38 bewegt, wird der dritte oder vierte Gang geschaltet, indem über die Schaltgabel 8 und die zugehörigen Gleitsteine die entsprechende Schaltkupplung eingerückt wird. In der Schaltstellung kann die Schaltgabel 8 über Rastnuten 70 verrastet werden, indem ein Rastenbolzen 72 in die Rastnut 70 eingreift. Die Wähl- und Schaltwelle 32 wird mittels eines nicht näher dargestellten Gestänges gedreht und axial verschoben.
An dem Schaltfinger 46 ist ein Schieber 56 angeordnet, der zwei Einspurnocken 58 und 60 aufweist. Dieser Teil der Schalteinrichtung 2 ist in der Fig. 2 auszugsweise näher beschrieben.

Die Fig. 2 zeigt an der Schaltwelle 32 den Schaltfinder 46, der den Schieber 56 trägt. Der Schaltfinger 46 kann bei einer entsprechenden Drehung der Schaltwelle 32 in Eingriff gebracht werden mit dem gabelförmigen Mitnehmer 54 an der Schaltgabel 10, wodurch dann durch eine axiale Bewegung der Schaltwelle 32 in Schaltrichtung 38 der fünfte oder sechste Gang geschaltet wird. Der erste Einspurnocken 58 befindet sich in der gezeigten Neutralstellung der Gangschalteinrichtung 2 auf einer Seite eines Kulissenelementes 62, das mit Verschraubungen 64 am Getriebegehäuse befestigt ist. In dem Kulissenelement 62 sind Schlitze 66 eingearbeitet, deren Anzahl der Anzahl der Schaltgassen entspricht. Auf der dem Einspurnocken 58 gegenüberliegenden Seite des Kulissenelementes 62 ist der Einspurnocken 60 am Schieber 56 vorgesehen. Die Nut 68 zwischen den Einspurnocken 58 und 60 entspricht im wesentlichen der Länge der Schlitze 66. Die Einspurnocken 58 und 60 weisen Anschrägungen auf, die mit Anschrägungen 74 an den Schlitzen 66 in Eingriff gebracht werden können.

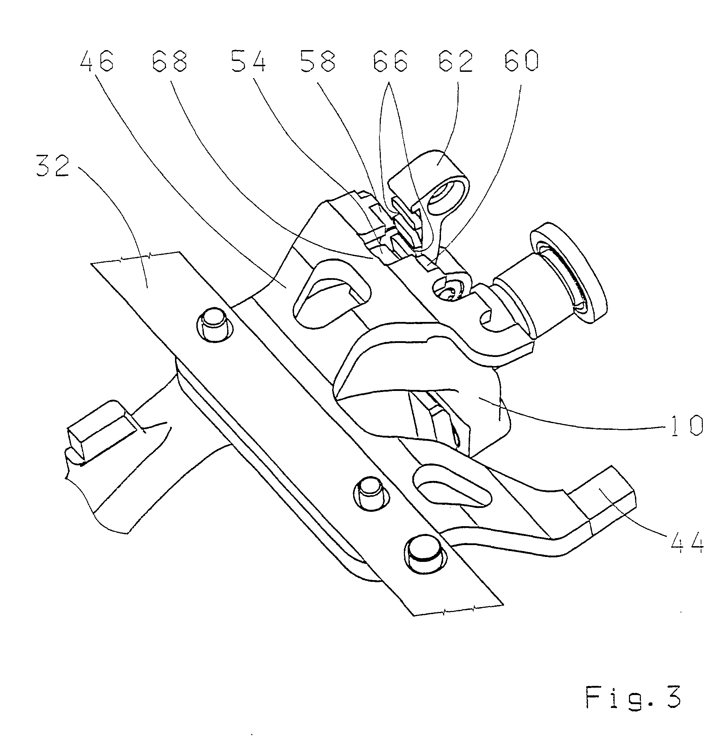

Eine veränderte Ausführungsform ist in der Fig. 3 dargestellt. Hier ist der Schaltfinger 46 so gestaltet, dass er die beiden Einspurnocken 58 und 60 direkt aufweist. Die Nut 68 zwischen den beiden Einspurnocken 58 und 60 kann bei einer entsprechenden Drehung der Schaltwelle 32 in Eingriff gebracht werden mit dem hier nockenförmigen Mitnehmer 54 an der Schaltgabel 10, wodurch dann durch eine axiale Bewegung der Schaltwelle 32 in Schaltrichtung 38 der fünfte oder sechste Gang geschaltet wird. Das Kulissenelement 62 mit den Schlitzen 66 ist in hier nicht gezeigter Weise im Getriebegehäuse befestigt. Die Nut 68 zwischen den Einspurnocken 58 und 60 entspricht im wesentlichen der Länge der Schlitze 66.

### Bezugszeichen

- 2: Schalteinrichtung
- 4: Schaltschwinge
- 6: Schaltschwinge
- 8: Schaltschwinge
- 10: Schaltschwinge
- 12: Schwenkachse
- 14: Schwenkachse
- 16: Schwenkachse
- 18: Schwenkachse
- 20: Lagerbohrung
- 22: Lagerbohrung
- 24: Lagerbohrung
- 26: Lagerbohrung
- 28: Gleitstein
- 30: Drehachse
- 32: Wähl- und Schaltwelle
- 34: Drehachse
- 36: Drehrichtung
- 38: Schaltrichtung
- 40: Schaltfinger
- 42: Schaltfinger
- 44: Schaltfinger
- 46: Schaltfinger
- 48: Mitnehmer
- 50: Mitnehmer
- 52: Mitnehmer
- 54: Mitnehmer
- 56: Schieber
- 58: Einspurnocken
- 60: Einspurnocken
- 62: Kulissenelement
- 64: Verschraubung
- 66: Schlitz
- 68: Nut
- 70: Rastnut
- 72: Rastenbolzen
- 74: Anschrägungen

## Patentansprüche

1. Gangschalteinrichtung (2) mit einer Einstangen-Schalteinrichtung in einem Gehäuse eines Kraftfahrzeug-Handschaltgetriebe, die eine zentrale Schaltwelle (32) und gabelförmige Schaltelemente in Form von Schaltschwingen oder Schaltgabeln (4, 6, 8, 10) umfasst, die wahlweise und einzeln durch Drehen der Schaltwelle (32) mit der Schaltwelle (32) in Eingriff gebracht werden und die durch Schieben der Schaltwelle (32) entlang einer Drehachse (34) der Schaltwelle (32) eine Gangschaltung des ausgewählten Schaltelementes ausführen, und bei der die Schalteinrichtung (2) ein mit der Schaltwelle (32) verbundenes erstes Element (58, 60) aufweist, das mit einem zweiten, im Gehäuse befestigten Element (62) zusammenwirkt zur Definition der Drehung der Schaltwelle (32), **dadurch gekennzeichnet, dass** das im Gehäuse befestigte zweite Element (62) eine der Anzahl der Schaltgassen entsprechende Anzahl von Schlitzen (66) definierter Breite aufweist, die mit zwei an der Schaltwelle (32) angeordneten Stiften (58, 60) zusammenwirken, die das erste Element bilden und von denen jeweils einer (58, 60) beim Einlegen einer der in der gewählten Schaltgassen angeordneten Gangstufe in denjenigen der Schlitze (66) eingreift, der bei Drehen der Schaltwelle (32) der jeweiligen Schaltgasse entspricht.

2. Gangschalteinrichtung (2) nach Anspruch 1, **dadurch gekennzeichnet, dass** die Stifte (58, 60) an einem Schaltfinger (46) angeordnet sind, mit dem eine der gabelförmigen Schaltelemente (10) zur Gangschaltung bewegbar ist.

3. Gangschalteinrichtung (2) nach Anspruch 1 oder 2, **dadurch gekennzeichnet, dass** zwischen den beiden Stiften (58, 60) eine Nut (68) vorgesehen ist, die im wesentlichen der Länge der Schlitze (66) im zweiten Element (62) entsprechen.

4. Gangschalteinrichtung (2) nach Anspruch 3, **dadurch gekennzeichnet, dass** die Nut (68) zwischen den beiden Stiften (58, 60) mit einem am dem gabelförmigen Schaltelement (10) angeordneten Mitnehmer (54) zur Gangschaltung zusammenwirkt.

5. Gangschalteinrichtung (2) nach einem der Ansprüche 2 bis 4, **dadurch gekennzeichnet, dass** die beiden Stifte (58, 60) an einem Schieber (56) angeordnet sind, der auf den Schaltfinger (46) aufgesteckt ist.

6. Gangschalteinrichtung (2) nach einem der Ansprüche 1 bis 5, **dadurch gekennzeichnet, dass** die axiale Ausdehnung des ersten (58, 60) und zweiten Elementes (62) entlang der Drehachse (34) der Schaltwelle (32) im wesentlichen bestimmt ist durch die Länge der Schlitze (66) und der hinzuaddierten Länge der beiden Stifte (58, 60).

7. Gangschalteinrichtung (2) nach einem der Ansprüche 1 bis 6, **dadurch gekennzeichnet, dass** die Stifte (58, 60) die Form eines Zahnes oder Nockens aufweisen.

8. Gangschalteinrichtung (2) nach einem der Ansprüche 1 bis 6, **dadurch gekennzeichnet, dass** die Schlitze (66) Abweisschrägen (74) aufweisen.

## Claims

1. The invention relates to a gear-shifting device (2) with a single-rod shifting system in a housing of a motor-vehicle manual transmission; with said device comprising a central gearshift shaft (32) and fork-shaped shifting components in the form of shifting levers or shifting forks (4, 6, 8, 10), which through rotation of the gearshift shaft (32) alternatingly and individually engage with the gearshift shaft (32), and which through displacement of the gearshift shaft (32) along a rotational axis (34) of the gearshift shaft (32) carry out a gearshift of the selected shifting component; and with said gear-shifting device (2) featuring a first element (58, 60), which is connected to the gearshift shaft (32) and which cooperates with a second element (62) mounted in the housing to define the rotation of the gearshift shaft (32), **characterized in that** the second element (62) features slits (66), the width of which is defined and the number of which coincides with the number of shift gutters, with said slits cooperating with two pins (58, 60), which are arranged on the gearshift shaft (32) and constitute the first element, and upon engagement of a gear step arranged in the selected shift gutter, with either of the two pins (58, 60) engaging with that slit (66) which during rotation of the gearshift shaft (32) corresponds to the respective shift gutter.

2. Gear-shifting device (2) according to claim 1, **characterized in that** the pins (58, 60) are arranged on a shifting finger (46) by means of which one of the fork-shaped shifting components (10) can be moved for shifting gears.

3. Gear-shifting device (2) according to claim 1 or 2, **characterized in that** between the two pins (58, 60) a groove (68) is provided, the length of which largely corresponds to that of the slits (66) in the second element (62).

4. Gear-shifting device (2) according to claim 3, **characterized in that** the groove (68) between the two pins (58, 60) cooperates with a driver (54) arranged on the fork-shaped shifting component (10) for shifting gears.

5. Gear-shifting device (2) according to one of the claims 2 through 4, **characterized in that** the two pins (58, 60) are arranged on a slide (56), which is slipped on the shifting finger (46).

6. Gear-shifting device (2) according to one of the claims 1 through 5, **characterized in that** the axial extension of the first (58, 60) and of the second element (62) along the axis of rotation (34) of the gear-shifting device (32) is largely determined by the length of the slits (66) and the added length of the two pins (58, 60).

7. Gear-shifting device (2) according to one of the claims 1 through 6, **characterized in that** the pins (58, 60) are shaped like a tooth or a cam.

8. Gear-shifting device (2) according to one of the claims 1 through 6, **characterized in that** the slits (66) feature deflecting chamfers.

## Revendications

1. Dispositif d'enclenchement de rapports (2) avec un dispositif d'enclenchement à une tige dans le carter d'une boîte de vitesses manuelle d'un véhicule, qui comprend un arbre d'enclenchement central (32) et des éléments d'enclenchement en forme de fourches, sous la forme de bielles ou de fourches d'enclenchement (4, 6, 8, 10), qui peuvent être emboîtées, de manière sélective et indépendante, avec l'arbre d'enclenchement (32) grâce à la rotation de l'arbre d'enclenchement (32), et qui, grâce au déplacement de l'arbre d'enclenchement (32) le long d'un axe de rotation (34) de l'arbre d'enclenchement (32), effectuent l'enclenchement d'un élément d'enclenchement sélectionné et dans lequel le dispositif d'enclenchement (2) comprend un premier élément (58, 60) relié avec l'arbre d'enclenchement (32), qui interagit avec un deuxième élément (62) fixé dans le carter pour définir la rotation de l'arbre d'enclenchement (32), **caractérisé en ce que** le deuxième élément (62), fixé dans le carter, comprend des encoches (66), d'une largeur déterminée, dont le nombre correspond au nombre de voies d'enclenchement, et qui interagissent avec deux tiges (58, 60) disposées sur l'arbre d'enclenchement (32), qui constituent le premier élément et dont une (58, 60) s'emboîte, lors de l'enclenchement d'un des rapports disposé dans la voie d'enclenchement sélectionnée, dans l'une des rainures (66) qui correspond à la voie d'enclenchement lors de la rotation de l'arbre d'enclenchement (32).

2. Dispositif d'enclenchement de rapports (2) selon la revendication 1, **caractérisé en ce que** les tiges (58, 60) sont disposées au niveau d'un doigt d'enclenchement (46) grâce auquel un des éléments d'enclenchement (10) en forme de fourche peut se déplacer pour l'enclenchement du rapport.

3. Dispositif d'enclenchement de rapports (2) selon la revendication 1 ou 2, **caractérisé en ce que**, entre les deux tiges (58, 60), se trouve une rainure (68) qui correspond sensiblement à la longueur de l'encoche (66) du deuxième élément (62).

4. Dispositif d'enclenchement de rapports (2) selon la revendication 3, **caractérisé en ce que** la rainure (68) entre les deux tiges (58, 60) interagit avec un taquet (54) disposé sur l'élément d'enclenchement (10) en forme de fourche pour l'enclenchement du rapport.

5. Dispositif d'enclenchement de rapports (2) selon l'une des revendications 2 à 4, **caractérisé en ce que** les deux tiges (58, 60) sont disposées sur un coulisseau (56) enfiché sur le doigt d'enclenchement (46).

6. Dispositif d'enclenchement de rapports (2) selon l'une des revendications 1 à 5, **caractérisé en ce que** la dimension axiale du premier (58, 60) et du deuxième élément (62) le long de l'axe de rotation (34) de l'arbre d'enclenchement (32) est déterminée par la longueur des encoches (66) et de la longueur des deux tiges (58, 60) qui s'y ajoutent.

7. Dispositif d'enclenchement de rapports (2) selon l'une des revendications 1 à 6, **caractérisé en ce que** les tiges (58, 60) se présentent sous la forme d'une dent ou d'une came.

8. Dispositif d'enclenchement de rapports (2) selon l'une des revendications 1 à 6, **caractérisé en ce que** les encoches (66) comportent des chanfreins (74).
